# EUROPEAN PATENT SPECIFICATION

(11) **EP 1 390 412 B1**
(45) Date of publication and mention of the grant of the patent: **14.06.2006**
(21) Application number: 02741509.0
(22) Date of filing: 24.04.2002
(51) Int. Cl.: C08B 31/00

(54) **CROSS-LINKING OF STARCH**
VERNETZUNG DER STÄRKE
RETICULATION D'AMIDON

(30) Priority: 26.04.2001 EP 01201545
(43) Date of publication of application: 25.02.2004
(73) Proprietor: Coöperatieve Verkoop- en Productievereniging van Aardappelmeel en Derivaten 'AVEBE' B.A., NL-9641 JA Veendam (NL)
(72) Inventor: Hiemstra, Hendrik Cornelis, 9642 HS Veendam (NL); Kesselmans, Ronald Peter Wilhelmus, 9468 HK Assen (NL); Maas, Augustinus Arnoldus Maria, 9753 BX Haren (NL); Hadderingh, Egbert, 9642 JT Veendam (NL)
(74) Representative: Prins, Adrianus Willem
(86) International application number: PCT/NL2002/000269
(87) International publication number: WO 2002/088188

(56) References cited:
- EP-A- 0 041 316
- CA-A- 949 965
- US-A- 2 500 950
- US-A- 2 626 257

## Description

The invention relates to a method for preparing a cross-linked starch, comprising the reaction of a starch material with a cross-linking agent.

Various methods for cross-linking starch are known in the art. A starch material may be cross-linked under alkaline conditions after dissolving or dispersing it in an aqueous medium, further comprising a cross-linking agent. Most known methods, however, comprise the use of wet conditions.

Major drawbacks of the cross-linking under wet conditions include high water consumption and a high energy consumption during the reaction, in particular if the reaction is performed at an elevated temperature, during which the temperature has to be maintained actively by external means, and in particular during the drying of the cross-linked product and the excess of reagents that have to be disposed of after the reaction. Furthermore, the high amounts of reagents lead either to a product with a high amount of impurities or require and intensive purification procedure.

In the US Patent 2,884,413, a method is disclosed for the preparation of orthopliosphate esters of starch. To prepare a di-starch phosphate, a reaction mixture is prepared by adding an alkali metal inorganic phosphate reagent to a starch slurry and thereafter drying the mixture to adjust the moisture content of the starch to about 5-20%. In a method according to USP 2,884,413, the reaction mixture then needs to be subjected to a temperature between 100°C and 160°C in order to let dimerisation of the starch take place. During the reaction the moisture is allowed to evaporate.

Like wet cross-linking methods, the disclosed method starts from a starch slurry. This starch slurry needs to be dried, which is not only energy-consuming but also time-consuming. Furthermore, extra equipment is required to employ the drying step (such as a filtration installation), and equipment to allow the reaction to take place above 100°C. The high temperature during the cross-linking may give rise to undesirable degradation and mono-phosphatation of the cross-linked starch product.

US 2,626,257 discloses a cross-linking reaction wherein a commercially dry corn starch is used.

US 2,500,950 discloses a similar dry cross-linking reaction wherein commercially dry tapioca starch is used.

EP0041316 discloses a method of modifying starch which involves the use of UHF (Ultra high frequency) radiation.

CA 949965 describes a method for the preparation of crosslinked starch wherein a wet starch slurry is filtered to a moisture content of 40-50% and subjected to heat between 40C and 70°C. Such moisture contents still require substantial post-process drying and are not economically attractive.

It is an object of the present invention to provide an alternative cross-linking method, which is economically more attractive than known processes.

Surprisingly it has been found that it is possible to prepare a cross-linked starch at a temperature below 100°C under semi-dry conditions. Accordingly the invention relates to a method for preparing a cross-linked starch, comprising the reaction of a starch material with a cross-linking agent, wherein the reaction takes place under semi-dry conditions at a temperature below 100°C.

It has been found that the reaction takes place in a non-degradative manner and at a sufficient rate to allow the implementation of a method according to the invention at an industrial scale. During a method according to the invention the starch material remains remarkably processable. More in particular, the material shows a surprisingly low degree of smearing, lump formation or other form of contamination during processing.

Furthermore a method according to the invention is found to be very robust; the product quality is highly predictable from the chosen process parameters. Another advantage is the stability of the colour - due to the non-degradative conditions - which can be realised by preparing a cross-linked starch according to the invention.

The economic advantages of a method according to the invention include a low energy consumption during employing the method (relatively low reaction temperature, low water content), a short processing time, the requirements for the equipment (no suspension tank, vacuum filters), the low consumption of raw materials (water, reagents) and the low waste.

The term semi-dry conditions as used herein relates to conditions wherein the starch material on the one hand contains at least some residual water but on the other hand the water content is too low to act as a solvent in which the starch is dispersed.

Reaction mixture is used herein to describe a mixture of starch, cross-linking agent, water and optionally other additives, for processing by a method according to the invention.

Residence time as used herein is meant to indicate the time during which the reaction mixture is allowed to react until further processing. One or more process steps that may follow include the termination of the reaction, a drying step, storage and/or one or more other modification processes

Equilibrium moisture content is used herein to indicate the residual moisture content of a commercially available dry starch.

The starch material may comprise any type of starch or combination of different starches and/or derivatives thereof. Preferred starches include wheat starches, maize starches, sorghum starches, potato starches, rice starches, tapioca starches, including amylopectin, high amylose and other varieties thereof. The starch material may also be any starch derivative.

The starch may be purified or it may still contain components usually present in a starch granule, such as proteins, fatty acids etc.

As stated before, the starch material may comprise an amylopectin starch, in particular an amylopectin starch having an amylopectin content of at least 90 wt.%, preferably at least 95 wt.%, based upon the dry starch. Examples of such starches are waxy maize starch, waxy wheat starch, amylopectin potato starch, amylopectin tapioca starch, and/or another high amylopectin starch from a tuber, a root and/or a grain.

The cross-linking agent may be chosen from any suitable cross-linking agent. Preferably one or more compounds chosen from the group formed by trimetaphosphate (TMF), polymetaphosphates (e.g. hexametaphosphate), epichlorohydrine, POCl₃, biphenyl compounds, N,N,-dimethylolimidzolidon-2 (DMEU), adipic acid/acetic acid, cyanuric chloride are used. Particularly good results have been achieved with trimetaphosphate as a cross linking agent.

The amount of cross-linking agent used in a method according to the invention depends upon the desired product specification. The amount of cross-linking agent is preferably chosen in the range of about 10 mg to about 50 g per kg starch (based upon the weight of the starch at equilibrium moisture content), more preferably about 100 mg to about 25 g per kg starch (based upon the equilibrium moisture content of the starch), and even more preferably about 250 mg to 20 g per kg starch (based upon the weight of the starch at equilibrium moisture content).

Depending upon the desired degree of cross-linking and the chosen method parameters, such as the nature of the starch material, cross-linking agent, temperature, pH *etc.*, the semi-dry conditions may be chosen within a wide range.

In a preferred embodiment the moisture content is chosen relative to the equilibrium moisture content of the starch. Equilibrium moisture content being the residual moisture content of a commercially available dry starch. Preferably at least some additional moisture is added to the commercially available dry starch. Satisfactory results have been obtained with a method, wherein the moisture content during the cross-linking reaction is in the range of 1-25 wt.% based upon the dry starch content, above the equilibrium moisture content of the starch. Very good results have been achieved with a method, wherein the moisture content during the cross-linking reaction is in the range of about 5-25 wt.%, based upon the dry starch content, above the equilibrium moisture content of the starch. In a much preferred embodiment the moisture content is about 5-20 wt.% above the equilibrium moisture content. Most preferred is a moisture content of about 10-15 wt.% above the equilibrium moisture content. Such an embodiment shows *inter alia* a very favourable reaction speed, whilst maintaining a very satisfactory processability of the starch-material. The very satisfactory processability is unexpected, since in known industrial processes, mixtures containing starch, 5-10 g NaOH and 10-15 wt.% water above the equilibrium moisture content of the starch may be very gooey, making it difficult to process, because of the silting up of parts of the installation (e.g. a mixer or a tube) which is to be employed in a cross-linking process.

A method according to the invention may be carried out within a wide temperature range of 5-75°C, preferably in the range of about 15-55°C, more preferably in the range of about 20-50°C. The optimal temperature with respect to the reaction speed depends upon the desired product quality, the nature of the starch and other reaction conditions. For example, the cross-linking of a wheat starch may take place particularly fast at a temperature of about 45-55°C.

In another preferred embodiment the temperature is chosen relatively low, e.g. in the range of 20-30°C. A particular reason to employ the invention in the range of 20-30°C may be the low energy consumption during the process. The heat developed from the reaction, may be sufficient to maintain the temperature, which is a considerable advantage over known processes for cross-linking under semi-dry conditions (performed at temperatures of more than 100°C) or known cross-linking processes in a slurry (usually performed at a temperature of 35°C or higher).

The residence time is of great influence on the development of the reaction; if the residence time is increased, the end-point of the reaction may be reached faster. In a preferred embodiment, the residence time is chosen in the range of 0 hour to about 6 hours, more preferably in the range of about 0.1-4 hours, even more preferred about 0.5 to 2 hour. If desired, the resultant mixture may be stored without terminating the reaction. Thus a cross-linking reaction may continue. Such a post-process reaction is typically completed within a period of 3 weeks or less, depending upon the conditions of the cross-linking method that has been employed and the storage conditions.

A method according to the invention is preferably performed under alkaline conditions, preferably at a pH in the range of about 8-13. In a particularly preferred embodiment the pH is chosen in the range of about 10-12. The pH value of a semi-dry reaction mixture as used herein can be determined in an aqueous dispersion of the reaction mixture. The pH determination is suitably performed by dispersing 70 grams (calculated as absolute dry matter, corrected for the moisture content) of the alkaline starch material (the reaction mixture) in 150 g of demineralised water and determining the actual pH value of the solvent (the aqueous phase) by a pH meter (such as a Radiometer PHM 82) at room temperature. The pH under semi-dry conditions is to be interpreted as the measured normal pH in the solvent (the aqueous phase) at room temperature.

In an preferred method according to the invention 3-12 g NaOH (or an equivalent amount of another base) per kg starch are used (based upon the weight of the starch at equilibrium moisture content). In a more preferred embodiment 5-10 g NaOH (or an equivalent amount of another base) per kg starch are used and in an even more preferred embodiment 6-9 g NaOH (or an equivalent amount of another base).

The semi-dry conditions may be achieved by any conventional means, e.g. by mixing starch with water, cross-linking agent, starch and optionally other reagents and drying the formed mixture. It is however preferred to add water, or an aqueous solution comprising other reagents in substantially the right amount to be present during the reaction, to a commercially dry starch at equilibrium moisture content. This may for example be achieved by spraying water or aqueous solution over the starch or by adding water or aqueous solution droplets to the starch. The mixture is then preferably homogenised during the addition of the droplets.

The cross-linking reaction may be performed in an open system, in which water can evaporate from the system. Preferably the cross-linking reaction is performed in a closed system, wherein evaporation of water is avoided.

In a preferred embodiment the reaction mixture is homogenised during at least part of the method, more preferably it is intensively homogenised. The homogenisation may be performed before and/or during the cross-linking reaction. In a preferred embodiment, the reaction mixture is intensively homogenised during or shortly after the addition of the reagents (water, cross-linking agent, optionally other additives), and then stored without further homogenisation during the cross-linking reaction. Suitable homogenisation procedures are known in the art. Particularly suitable is homogenisation by a Schugi mixer or a Lödige mixer.

After the reaction has been completed to a sufficient degree, the reaction may be terminated. Depending upon the cross-linking agent and other conditions, the skilled professional will know how the reaction can be terminated. For many cross-linking agents, a very suitable termination is the neutralisation of the reaction mixture by means of an acid. Cross-linking of starch with a phosphate-type agent, can be terminated by adjusting the pH to a neutral or slightly acidic value, *e.g.* to a pH of 6-6.5. The pH is preferably adjusted with a strong acid such as phosphoric acid (H₃PO₄), sulphuric acid (H₂SO₄) hydrochloric acid (HCl) or nitric acid (HNO₃) and/or with an organic acid, for example citric acid, fumaric acid etc.

Cross-linked starch, obtained by a method according to the invention, may be washed, e.g. with water or another solvent, to remove residual reagents and/or additives.

The cross-linked starch may also be dried. Depending upon the intended use, the drying may be continued to any desired degree, *e.g*. varying from a few weight percents above the equilibrium moisture content to a value far below the equilibrium moisture content of the cross-linked starch.

The cross-linked starch may be processed further, without first terminating the reaction or after termination of the reaction. Examples of further processing include for example extrusion, drum-drying, autoclaving and any (other) process in which the cross-linked starch is exposed to heat, chemicals, mechanical energy or a combination thereof.

The use of cross-linked starches is widely spread over many applications in the food and non-food industry. A starch obtainable by a method according to the invention may for example be used as a thickener in a pudding a soup or a sauce. Such a starch will usually have a relatively low cross-linking degree. Cross-linked starch, e.g. a cross-linked hydroxyethylether derivatised starch, may also be used as a thickening agent in a construction material based upon gypsum and/or cement. A cross-linked starch derivative may be used in the textile industry as component for textile ink, in which the cross-linked starch may act as a thickening component and/or as an agent to improve the rheological behaviour of the ink.

A cross-linked starch, obtainable by a method according to the invention may be used as a thermo-stable drilling-fluid for the oil industry. It has been found that such a starch has very good thermo-stability characteristics.

A cross-linked cationic starch obtainable by the present invention may for example be used in a paper. It may in particular be used in the paper making process during the formation of a paper web.

A starch with a high degree of cross-linking, having highly rigid starch granules may be used as a dusting powder. *e.g*. for surgical handgloves, or as filler in soap tablets.

The cross-linked starch may also very suitably be used in an adhesive, e.g. in a paper sack adhesive. The dry substance of such an adhesive may substantially consist of the cross-linked starch. A cross-linked starch obtainable by a method of the invention may also be used in pharmaceutical applications. It may for example be used for the manufacture of a disintegrant for pharmaceutical applications, which enhances the disintegration of a tablet in water.

The invention will now be elucidated by the following examples.

### Example 1

### Cross-linking of starch with sodium trimetaplzosphate in a semi dry state.

Starch was mixed in a Schugi mixer (Type: Flexomix) simultaneously with an aqueous solution of sodium hydroxide, sodium trimetaphosphate (aqueous solution or solid powder) and water during a few seconds, then collected, dried to a desired moisture content and stored at room temperature.

Optionally the mixture was processed in a tape mixer for variable time intervals in order to create a residence time. Afterwards the mixture was collected, and dried to the desired moisture content, then stored at room temperature.

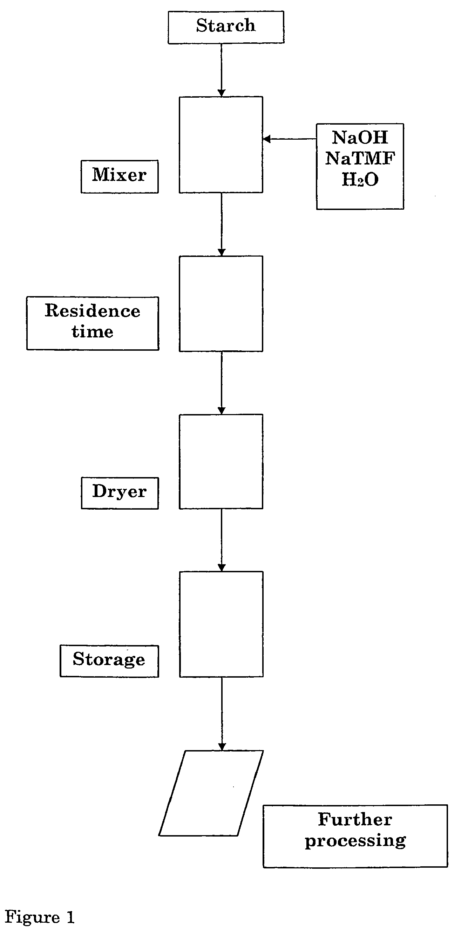

The used process is schematically shown in the flow chart of Figure 1.

The degree of cross-linking was determined by measuring the viscosity by means of a Fann viscometer.

### Determination of the viscosity with a Fann viscometer

Fann viscosity of the cross-linked starch was determined as an indicator for the cross-linking degree. A low Fann viscosity indicates a high cross-linking degree; a high Fann viscosity indicates a low cross-linking degree.

Unless stated otherwise, a quantity of 70 g dry product was suspended in 150 g water in a beaker with a volume of 600 ml. The pH was adjusted to 6.0 - 6.5 by means of a 5 M solution of sulphuric acid. 250 ml of a 50% solution of potassium isothiocyanate was added and the mixture was stirred with a six-hole blade-stirrer during 15 minutes at 35 degrees Celsius and 250 rpm. The viscosity was measured with a Fann viscometer model 35 SA at 300 rpm at 35 °C, unless stated otherwise.

The results are shown in the following Examples. The moisture contents mentioned in the Tables are total moisture contents of the mixture, including the equilibrium moisture content of the starches used, unless stated otherwise.

The equilibrium moisture content at 70% Relative Humidity is 19 wt.% for potato starch and 13 wt.% for tapioca, wheat and corn starch. The figures are the same for the amylopectin varieties of these starches.

### Example 2

### Variation of the Botanical origin of the processed starch

Several starches were processed as described in Example 1. The NaTMF was added as a solid powder. The products were directly collected after the mixer, without any residence time and drying. The cross-linked starches were stored for 1 day at room temperature before measuring the Fann viscosity. The results are shown in Table 1

**Table 1**

| Starch type | Reaction Mixture | | | Viscosity after 1 day [mPa.s] |
|---|---|---|---|---|
| | NaOH [g] | NaTMF [g] | H₂O [%] | |
| Tapioca | 7.5 | 30 | 25 | 100 |
| | | | | |
| Potato (amylopectin) | 7.5 | 30 | 35 | 195 |
| | | | | |
| Wheat | 7.5 | 28 | 23 | 40 |
| | | | | |

### Example 3 Variation of the Moisture content in a mixture based on wheat starch

A wheat starch was treated as described in Example 1 with 7.5 g/kg NaOH, 30 g/kg NaTMF (powder), and a variable amount of H₂O above the equilibrium moisture content. The mixture was directly collected after the mixer, without any residence time and drying. The treated product was stored at room temperature for 6 hours before measuring the Fann viscosity. The results are shown in Table 2

**Table 2**

| Moisture content [%] | Viscosity after 6 hours [mPa.s] |
|---|---|
| 13 [eq.] | 440 |
| 23 [13+10] | 195 |
| 27 [13+14] | 85 |

### Example 4

### Variations in Residence time

A wheat starch was treated as described in Example 1 with 7.5 g/kg NaOH, 15 g/kg NaTMF (solution), 25% H₂O. The residence time was varied. The cross-linked starch was dried to 14%-15% H₂O, and stored at room temperature for 6 days. The Fann viscosity results are shown in Table 3.

**Table 3**

| Residence time [min] | Viscosity after 6 days [mPa.s] |
|---|---|
| 20 | 177 |
| 30 | 124 |
| 40 | 103 |
| 50 | 95 |
| 60 | 72 |

### Example 5

### Variation of the Temperature at which a mixture based on wheat starch is processed

A wheat starch was treated as described in Example 1 with 10 g/kg NaOH, 30 g/kg NaTMF (powder), 25% H₂O. The residence time was set for 0.5 and 1.0 hours; During this period the temperature of the reaction mixture was varied as indicated in Table 4. The cross-linked products did not undergo a drying step, and were stored at room temperature for 20 minutes. The Fann viscosity results are shown in Table 4.

**Table 4**

| Temperature | Viscosity after residence time | |
|---|---|---|
| [°C] | [mPa.s] | |
| | 0.5 hours | 1.0 hours |
| 27 | 250 | 60 |
| 40 | 45 | 20 |
| 60 | 24 | 11 |

### Example 6

### The influence of pH during storage

The reactivity under different storage conditions (alkali versus neutral pH) of a potato (amylopectin) starch was determined by a process as described under Example 1. Two mixtures were reacted, each comprising 7.5 g/kg NaOH, 30 g/kg NaTMF, 35 % H₂O. The residence time was 45 minutes. One batch was neutralised to pH 6,5 with 6 N HCl, at the end of the residence time. Thereafter, both batches of cross-linked starch, were dried to 18%-20% H₂O, and stored at room temperature for several days. The results are shown in Table 5.

**Table 5**

| Storage time | Viscosity# | |
|---|---|---|
| [days] | [mPa.s] | |
| | Alkali | Neutral pH |
| 1 | 73 | 182 |
| 7 | 43 | 162 |
| 14 | 39 | 188 |
| 31 | 35 | 190 |

| | | |
|---|---|---|
| #: Fann measurement based on 50 g dry matter. | | |

### Example 7

### Ecomomical en envirornmental advantages

A calculation was made of energy and water consumption of a method according to the invention in comparison with the traditional way of cross-linking in a suspension. The results are shown in Table 6.

**Table 6; comparison process type.**

| | Suspension | Semi-dry | Ratio |
|---|---|---|---|
| | [g/kg starch] | [g/kg starch] | |
| Amount of water needed for the reaction | 1000 | 120 | 8.3 |
| Amount of water to be evaporated | 200 | 120 | 1.7 |

Approximately eight times more water is needed to perform the same cross-linking in suspension as is needed in the process related to the invention.

Further, in the case of products with a relatively high degree of cross-linking, it has been observed that for a semi-dry process according to the invention half the quantity of NaTMF is needed.

In addition it was concluded from Table 6 that the amount of energy needed for the evaporation of water present in the filter cake of a starch cross-linked in a suspension is approximately twice as much as under semi dry conditions.

### Example 8

### texture of the reaction mixture

One batch of starch, NaOH and reagent S (chlorohydroxypropyltrimethyl-ammonium chloride) was mixed in a beaker glass with water to an amount of 35 wt.% total water. The resulting mixture was lumpy and showed a high degree of smearing at the wall of the beaker glass. The mixture was difficult to agitate.

Another batch of the same starch was mixed with a solution of water comprising NaOH and NaTMF to yield a final amount of 10 g NaOH and 30 g NaTMF per kg starch and an amount of 35 wt.% total water. The resulting mixture was homogenous and showed no significant smearing at the wall of the beaker glass. The mixture was significantly easier to agitate than the mixture of only starch, NaOH, reagent S and water.

## Claims

1. Method for preparing a cross-linked starch, comprising reacting a starch material with a cross-linking agent, wherein the reaction takes place at a temperature between 5-75°C under semi-dry conditions, and wherein the moisture content during the cross-linking reaction is 1-25 wt.%, based upon the dry weight of the starch, above the equilibrium moisture content of the starch.

2. Method according to claim 1, wherein said moisture content is 5-20 wt.%, based upon the dry weight of the starch, above the equilibrium moisture content of the starch

3. Method according to claim 1 or 2, wherein said reaction takes place at a temperature between 20-30°C.

4. Method according to any of the preceding claims, wherein the pH at the beginning of the reaction is set with 3-12 g of NaOH per kg of starch used (based upon the weight of the starch at equilibrium moisture content).

5. Method according to any of the preceding claims, wherein the cross-linking agent comprises one or more compounds chosen from the group formed by trimetaphosphate (TMF), polymetaphosphates, epichlorohydrine, POCl₃, N,N,-dimethylol-imidzolidon-2 (DMEU), adipic acid/acetic acid and cyanuric chloride.

6. Method according to any of the preceding claims, wherein the cross-linking agent is trimetaphosphate (TMF).

7. Method according to any of the preceding claims, wherein the cross-linking agent is present in a concentration of 10 mg to 50 grams per kilogram starch (based upon the weight of the starch at equilibrium moisture content).

8. Method according to any of the preceding claims, wherein the starch material comprises one or more starches selected from the group formed by wheat starches, rice starches, maize starches, potato starches, tapioca starches, sorghum starches and derivatives thereof.

9. Method according to any of the preceding claims, wherein the starch material comprises at least one starch having an amylopectin content of at least 90 wt.%, based upon the dry starch.

10. Method according to any of the preceding claims wherein the starch material is homogenised during at least part of the method.

11. Method according to any of the preceding claims wherein the cross-linked starch material is during further processing, exposed to heat, chemicals and/or mechanical energy

12. Method according to claim 11, wherein the cross-linked starch material is extruded, autoclaved and/or drum-dried.

13. Method according to any of the preceding claims wherein the reaction is terminated by neutralisation with an acid.

14. Method according to claim 13, wherein the acid is H₂SO₄, HCl, H₃PO₄, HNO₃ citric acid or fumaric acid.

15. Method according to any of the preceding claims wherein the cross-linked starch is washed and/or dried.

## Patentansprüche

1. Verfahren zur Herstellung einer vernetzten Stärke, das das Umsetzen eines Stärkematerials mit einem Vernetzungsmittel umfasst, wobei die Reaktion bei einer Temperatur von 5 bis 75 °C unter halbtrockenen Bedingungen stattfindet und wobei der Feuchtigkeitsgehalt während der Vernetzungsreaktion 1 bis 25 Gew.-%, bezogen auf das Trockengewicht der Stärke, oberhalb des Gleichgewichtsfeuchtigkeitsgehalts der Stärke liegt.

2. Verfahren gemäß Anspruch 1, wobei der Feuchtigkeitsgehalt 5-20 Gew.-%, bezogen auf das Trockengewicht der Stärke, oberhalb des Gleichgewichtsfeuchtigkeitsgehalts der Stärke liegt.

3. Verfahren gemäß Anspruch 1 oder 2, wobei die Reaktion bei einer Temperatur von 20 bis 30°C stattfindet.

4. Verfahren gemäß einem der vorstehenden Ansprüche, wobei der pH-Wert zu Beginn der Reaktion mit 3-12 g NaOH pro kg verwendeter Stärke (bezogen auf das Gewicht der Stärke beim Gleichgewichtsfeuchtigkeitsgehalt) eingestellt wird.

5. Verfahren gemäß einem der vorstehenden Ansprüche, wobei das Vernetzungsmittel eine oder mehrere Verbindungen umfasst, die aus der Gruppe ausgewählt sind, die aus Trimetaphosphat (TMF), Polymetaphosphaten, Epichlorhydrin, POCl₃, N,N-Dimethylolimidazolinon-2 (DMEU), Adipinsäure/Essigsäure und Cyanursäurechlorid besteht.

6. Verfahren gemäß einem der vorstehenden Ansprüche, wobei es sich bei dem Vernetzungsmittel um Trimetaphosphat (TMF) handelt.

7. Verfahren gemäß einem der vorstehenden Ansprüche, wobei das Vernetzungsmittel in einer Konzentration von 10 mg bis 50 g pro kg Stärke (bezogen auf das Gewicht der Stärke beim Gleichgewichtsfeuchtigkeitsgehalt) vorhanden ist.

8. Verfahren gemäß einem der vorstehenden Ansprüche, wobei das Stärkematerial eine oder mehrere Stärken umfasst, die aus der Gruppe ausgewählt sind, die aus Weizenstärken, Reisstärken, Maisstärken, Kartoffelstärken, Tapiokastärken, Sorghumstärken und Derivaten davon besteht.

9. Verfahren gemäß einem der vorstehenden Ansprüche, wobei das Stärkematerial wenigstens eine Stärke mit einem Amylopektingehalt von wenigstens 90 Gew.-%, bezogen auf die trockene Stärke, umfasst.

10. Verfahren gemäß einem der vorstehenden Ansprüche, wobei das Stärkematerial während wenigstens eines Teils des Verfahrens homogenisiert wird.

11. Verfahren gemäß einem der vorstehenden Ansprüche, wobei das vernetzte Stärkematerial bei der weiteren Verarbeitung Wärme, Chemikalien und/oder mechanischer Energie ausgesetzt ist.

12. Verfahren gemäß Anspruch 11, wobei das vernetzte Stärkematerial extrudiert, autoklaviert und/oder im Trommeltrockner getrocknet wird.

13. Verfahren gemäß einem der vorstehenden Ansprüche, wobei die Reaktion durch Neutralisation mit einer Säure abgebrochen wird.

14. Verfahren gemäß Anspruch 13, wobei es sich bei der Säure um H₂SO₄, HCl, H₃PO₄, HNO₃, Zitronensäure oder Fumarsäure handelt.

15. Verfahren gemäß einem der vorstehenden Ansprüche, wobei die vernetzte Stärke gewaschen und/oder getrocknet wird.

## Revendications

1. Procédé de préparation d'un amidon réticulé, comprenant la réaction d'un matériau d'amidon avec un agent de réticulation, dans lequel la réaction a lieu à une température comprise entre 5 et 75°C dans des conditions semi-sèches, et dans lequel la teneur en eau pendant la réaction de réticulation est comprise entre 1 et 25 % en poids, sur la base du poids sec de l'amidon, supérieure à la teneur normale en eau de l'amidon.

2. Procédé selon la revendication 1, dans lequel ladite teneur en eau est comprise entre 5 et 20 % en poids, sur la base du poids sec de l'amidon, supérieure à la teneur normale en eau de l'amidon.

3. Procédé selon la revendication 1 ou 2, dans lequel ladite réaction a lieu à une température comprise entre 20 et 30°C.

4. Procédé selon l'une quelconque des revendications précédentes, dans lequel le pH au début de la réaction est réglé avec 3-12 g de NaOH par kg d'amidon utilisé (sur la base du poids d'amidon à la teneur normale en eau).

5. Procédé selon l'une quelconque des revendications précédentes, dans lequel l'agent de réticulation comprend un ou plusieurs composés choisis dans le groupe formé par le trimétaphosphate (TMF), les polymétaphosphates, l'épichlorohydrine, POCl₃, N,N-diméthylolimidzolidon-2 (DMEU), l'acide adipique/acide acétique et le chlorure cyanurique.

6. Procédé selon l'une quelconque des revendications précédentes, dans lequel l'agent de réticulation est le trimétaphosphate (TMF).

7. Procédé selon l'une quelconque des revendications précédentes, dans lequel l'agent de réticulation est présent à une concentration comprise entre 10 mg et 50 grammes par kilogramme d'amidon (sur la base du poids de l'amidon à la teneur normale en eau).

8. Procédé selon l'une quelconque des revendications précédentes, dans lequel le matériau d'amidon comprend un ou plusieurs amidons choisis dans le groupe formé par les amidons de blé, les amidons de riz, les amidons de mais, les amidons de pomme de terre, les amidons de tapioca, les amidons de sorgho et leurs dérivés.

9. Procédé selon l'une quelconque des revendications précédentes, dans lequel le matériau d'amidon comprend au moins un amidon ayant une teneur en amylopectine d'au moins 90°% en poids, sur la base de l'amidon sec.

10. Procédé selon l'une quelconque des revendications précédentes, dans lequel le matériau d'amidon est homogénéisé pendant au moins une partie du procédé.

11. Procédé selon l'une quelconque des revendications précédentes, dans lequel le matériau d'amidon réticulé est exposé à la chaleur, à des produits chimiques et/ou une énergie mécanique pendant la suite du traitement.

12. Procédé selon la revendication 11, dans lequel le matériau d'amidon réticulé est extrudé, autoclavé et/ou séché dans un séchoir à cylindres.

13. Procédé selon l'une quelconque des revendications précédentes, dans lequel la réaction est terminée par neutralisation avec un acide.

14. Procédé selon la revendication 13, dans lequel l'acide est H₂SO₄, HCl, H₃PO₄, HNO₃, l'acide citrique ou l'acide fumarique.

15. Procédé selon l'une quelconque des revendications précédentes, dans lequel l'amidon réticulé est rincé et/ou séché.
